(19) Europäisches Patentamt
European Patent Office
Office européen des brevets

(11) EP 2 222 813 B1

(12) **EUROPÄISCHE PATENTSCHRIFT**

(45) Veröffentlichungstag und Bekanntmachung des Hinweises auf die Patenterteilung:
**23.11.2011 Patentblatt 2011/47**

(21) Anmeldenummer: **08863091.8**

(22) Anmeldetag: **03.12.2008**

(51) Int Cl.:
***C09K 8/524*** *(2006.01)*

(86) Internationale Anmeldenummer:
**PCT/EP2008/010209**

(87) Internationale Veröffentlichungsnummer:
**WO 2009/077078 (25.06.2009 Gazette 2009/26)**

(54) **ASPHALTEN-DISPERGATOREN AUF BASIS VON PHOSPHONSÄUREN**

ASPHALT DISPERSERS ON THE BASIS OF PHOSPHONIC ACIDS

AGENTS DE DISPERSION D'ASPHALTÈNES À BASE D'ACIDES PHOSPHONIQUES

(84) Benannte Vertragsstaaten:
**DE ES FR GB IT NL NO**

(30) Priorität: **15.12.2007 DE 102007060651**

(43) Veröffentlichungstag der Anmeldung:
**01.09.2010 Patentblatt 2010/35**

(73) Patentinhaber: **Clariant Finance (BVI) Limited**
**Road Town, Tortola (VG)**

(72) Erfinder:
- **COHRS, Carsten**
  **60316 Frankfurt (DE)**
- **DILSKY, Stefan**
  **84503 Altötting (DE)**
- **LEINWEBER, Dirk**
  **65779 Kelkheim (DE)**
- **FEUSTEL, Michael**
  **55278 Köngernheim (DE)**

(74) Vertreter: **Mikulecky, Klaus et al**
**Clariant Produkte (Deutschland) GmbH**
**Group Intellectual Property**
**Am Unisys-Park 1**
**65843 Sulzbach (DE)**

(56) Entgegenhaltungen:
**EP-A- 1 061 084**
**EP-A- 1 767 611**
**US-A1- 2006 042 796**
**US-A1- 2007 265 171**

- **A. R. STILES, W. E. VAUGHAN, F. F. RUST: "The Preparation of Dialkylphosphonates by Addition of Dialkyl Phosphites to Olefins" J. A. CHEM. SOC., Bd. 80, 1958, Seiten 714-716, XP002525469 in der Anmeldung erwähnt**

Bemerkungen:
Die Akte enthält technische Angaben, die nach dem Eingang der Anmeldung eingereicht wurden und die nicht in dieser Patentschrift enthalten sind.

EP 2 222 813 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft die Verwendung von Phosphonsäuren als Asphalten-Dispergatoren in asphaltenhaltigen Roh-, Rückstands- und Destillatölen.

Asphaltene sind Bestandteile von Rohölen. Sie enthalten eine Vielzahl von Strukturen, besonders hochmolekulare kondensierte aromatische Komponenten mit Heteroatomen. Angesichts der Komplexität ihrer Chemie werden Asphaltene als die Ölfraktion beschrieben, die in Benzol, aber nicht in Pentan löslich ist.

Im Rohöl liegen Asphaltene normalerweise als kolloidale Dispersion vor. Diese wird durch Ölharze stabilisiert.

Asphaltene können während der Produktion, der Raffination, des Transports und der Lagerung von Rohöl und davon abgeleiteten Produkten, wie z. B. schweres Heizöl oder Schiffsöl, ausfallen. Gemeinsame Ursachen für dieses Ausfallen sind ein Absinken der Temperatur oder ein Wechsel in der Zusammensetzung (z. B. Verdampfung von leicht flüchtigen Bestandteilen). Asphaltene können auch beim Fließen durch poröse Medien ausfallen. Fluten mit $CO_2$ während des Förderprozesses kann Asphaltene zum Flokkulieren oder zum Ausfällen bringen.

Manche Öle enthalten Kohlenwasserstoffwachse, die bei niedrigen Temperaturen ausfallen. Wechselwirkungen zwischen dem Ausfallen von Wachs und Asphaltenen können die Gesamtmenge an ausgefallener Substanz oder deren Bildungsgeschwindigkeit erhöhen.

Ausgefallene Asphaltene verursachen Probleme bei der Produktion und bei der Verarbeitung von Rohölen. Asphaltene schlagen sich nieder in Ventilen, Rohren und Fördereinrichtungen. An heißen Oberflächen, wie beispielsweise Wärmetauschern, kann sich die Carbonisierung dieser Niederschläge ihre Entfernung sehr schwierig machen. Die Niederschläge reduzieren den Wirkungsgrad von Anlagen und können im schlimmsten Fall zu einer kompletten Blockierung und zu einem Produktionsstop führen, was hohe Kosten verursacht. Schweröle, die oft zum Antrieb von Schiffen verwendet werden, enthalten beträchtliche Mengen an Asphaltenen. Das Ausfallen von Asphaltenen kann sowohl zu schlechter Verbrennung als auch zu Schwierigkeiten bei der Handhabung und bei der Lagerung des Treibstoffes führen.

Bitumen, Schweröle und Rückstände werden gelegentlich mit Lösemittel verdünnt, um die Viskosität für den Transport zu reduzieren. Wenn dabei Asphaltene ausfallen, so ergeben sich damit Probleme bei der Handhabung.

Das Ausfallen von Asphaltenen kann durch kleine Mengen an Dispergatoren verhindert oder verringert werden. Diese Substanzen zeigen einen oder mehrere der folgenden Effekte:

a) die Menge an Niederschlag wird reduziert
b) der Niederschlag bildet sich langsamer
c) der Niederschlag ist feiner verteilt
d) die Neigung des Niederschlages, sich auf Oberflächen abzulagern, wird reduziert

Wenn sich bereits Niederschläge von Asphaltenen gebildet haben, können sie durch den Gebrauch von Lösemitteln entfernt werden. Die Zugabe eines Dispergators kann die Wirksamkeit dieser Lösemittel verbessern.

Eine Vielzahl von Asphalten-Dispergatoren sind bereits bekannt. CA-A-2 029 465 und CA-A-2 075 749 beschreiben Alkylphenolformaldehydharze in Kombination mit hydrophilen-lipophilen Vinylpolymeren.

Die Asphalten-dispergierenden Eigenschaften von Dodecylbenzolsulfonsäure wird in US-4 414 035, D.-L. Chang und H. S. Fogler (SPE 25185, 1993), und durch M. N. Bouts et al. (J. Pet. Technol. 47, 782-787, 1995) beschrieben.

A. Stiles et al., J. Am. Chem. Soc. 1958, 80, 714-716 offenbart die radikalische Addition von Phosphonsäurediestern an Olefine.

Houben-Weyl, Band XII/1, 1963, Seite 352-353, Band E2, 1982, S. 310-311 und S. 350-351 offenbaren die Hydrolyse von alkylierten Phosphonsäureestern, die thermische Spaltung von alkylierten Phosphonsäureestern und die Reaktion von Olefinen mit phosphoriger Säure.

GB-A-2423099 offenbart ein Verfahren zur Vermeidung der Bildung von Vernetzungsprodukten von Asphaltenen, die in saurem Milieu in Gegenwart von Fe(III)-Ionen entstehen.

DE-A-10 2005 045133 offenbart die Verwendung von Alkylphosphonsäureestern als Co-Additiv für Asphaltendispergatoren, die Alkylphenol-Aldehydharze enthalten.

EP-1 362 087 offenbart die Verwendung von Cardanol-Aldehydharzen als Asphaltendispergatoren in Rohölen.

US-5 494 607 offenbart die Verwendung von Nonylphenol-Pentadecylphenol-Formaldehyd-Harzen als Asphaltendispergatoren in Rohölen, wobei das Pentadecylphenol aus Cashewnüssen gewonnen wurde.

EP-0 995 012 offenbart die Verwendung von Ethercarbonsäuren als Asphalten-Dispergatoren in Rohölen.

US-2006/042796 lehrt ein Verfahren zur Behandlung einer Erdölförderstelle, bei dem in die Erdölförderstelle eine Wasser-in-Öl-Emulsion eingebracht wird, die eine Verbindung enthält, welche die Ablagerung von Asphaltenen oder Paraffinen verhindert. Bei den Verbindungen handelt es sich beispielsweise um Ethylendiamintetramethylenphosphonat oder Hydroxyethyldiphosphonsäure. US-2007/265171 lehrt ein Verfahren zur Entfernung von Verstopfungen aus Erdölförderstellen, bei dem in die Erdölförderstelle eine Wasser-in-Öl-Emulsion eingebracht wird, die zur Dispergierung der Verstopfung geeignete oberflächenaktive Stoffe enthält.

Phosphonsäuren der im Folgenden angegebenen Formel (4) mit kurzem Alkylrest sind in DE-A-199 27 787 als Flammschutzmittel und Vorprodukte in der chemischen Synthese offenbart. Ihre Verwendung als Asphalten-Dispergatoren ist nicht beschrieben.

Die Synthese von Phosphonsäuren der im Folgenden angegebenen Formel (4) wird in DE-103 05 623 ausgehend von Phosphorhalogeniden offenbart. Ein halogenfreies Herstellverfahren wird nicht beschrieben.

Die bisher bekannten Dispergatoren können die durch das Ausfallen von Asphaltenen verursachten Probleme nur teilweise lösen. Da Öle in ihrer Zusammensetzung variieren, können einzelne Dispergatoren nur in einem beschränkten Bereich wirksam arbeiten, so dass kleine Änderungen in der Ölzusammensetzung einen großen Effekt auf deren Dispergiereigenschaften für Asphaltene haben. Deshalb sind in einigen Fällen die bekannten Dispergatoren nicht zufriedenstellend und zusätzliche Typen sind erforderlich. Außerdem können die bekannten Dispergatoren nur unzureichend in Rohölen nach einem "Squeeze-Treatment" detektiert werden. Unter Squeeze Treatment versteht man die Einbringung einer Lösung oder Emulsion unter Anwendung von Druck in einen Bereich, in welchem die Lösung/Emulsion ihre Wirksamkeit entfalten soll. In Ölfeldern erfolgt die Druckinjektion der Lösung/Emulsion dabei meist unterhalb des in der Formation vorliegenden Eigendruckes.

Es bestand somit die Aufgabe, neue Asphalten-Dispergatoren zur Verfügung zu stellen, die die beschriebenen Nachteile der bisher bekannten Dispergatoren nicht aufweisen. Sie sollen in der Lage sein, die in Rohölen und Rückstandsölen enthaltenen Asphaltene in hinreichendem Umfang zu dispergieren.

Überraschenderweise wurde gefunden, dass substituierte Phosphonsäuren verwendet werden können, um das Ausfallen und/oder das Ablagern von Asphaltenen in Rohölen und davon abgeleiteten Produkten zu verhindern. Die Phosphonsäuren sind durch das Phosphoratom durch verschiedene Methoden analytisch nachweisbar. Welche Methode zum Einsatz kommen kann, hängt von den Gegebenheiten im Ölfeld und der gewünschten Nachweisempfindlichkeit ab. So können beispielsweise die $^{31}$P NMR Spektroskopie (Nachweisgrenze bei ca. 0,5 %), inductive coupled plasma (ICP, Nachweisgrenze im ppm-Bereich), oder auch GC-Flammenphotometer (Nachweisgrenze im ppm-Bereich) zur Detektion herangezogen werden.

Gegenstand der Erfindung ist somit die Verwendung von Phosphonsäuren der Formel (4)

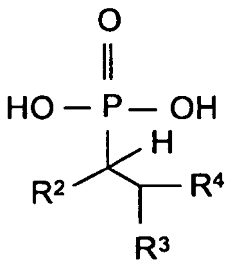

(4)

worin

$R^2$ für H oder $C_1$-$C_{500}$-Alkyl, und

$R^3$ und $R^4$ unabhängig voneinander für H oder $C_1$-$C_{500}$-Alkyl stehen,

mit der Maßgabe, dass nicht alle der Reste $R^2$, $R^3$, $R^4$ für Wasserstoff stehen, und welche ein Molekulargewicht von 250 bis 10.000 Einheiten aufweisen, in Mengen von 0,5 bis 10.000 ppm bezogen auf das Öl, zur Dispergierung von Asphaltenen in asphaltenhaltigen Rohölen oder Rückstandsölen.

Weiterer Gegenstand der Erfindung sind asphaltenhaltige Rohöle oder Rückstände, enthaltend 0,5 bis 10.000 ppm einer Verbindung der Formel (4), worin

$R^2$ H oder eine Alkylgruppe mit 30 bis 500 C-Atomen,

$R^3$, $R^4$ unabhängig voneinander H oder eine Alkylgruppe mit 30 bis 500 C-Atomen bedeuten,

mit der Maßgabe, dass nicht alle der Reste $R^2$, $R^3$, $R^4$ für H stehen, und welche ein Molekulargewicht von 250 bis 10.000 g/mol aufweist.

Die erfindungsgemäßen Phosphonsäuren der Formel (4) können alleine oder in Kombination mit anderen bekannten Asphalten-Dispergatoren eingesetzt werden. Im Allgemeinen wird man so viel der erfindungsgemäßen Phosphonsäure zugeben, dass man unter den gegebenen Bedingungen eine ausreichende Dispergierung erhält. Besonders geeignet sind die erfindungsgemäßen Phosphonsäuren der Formel (4) als Asphalten-Dispergatoren im sog. "Squeeze-Treatment", da sie über verschiedene Methoden nachgewiesen werden können.

Die Verbindungen der Formel (4) können als Asphaltendispergator in Rohölen verwendet werden. Ebenfalls geeignet sind sie für Rückstandsöle, die Asphaltene enthalten. Dabei kann es sich beispielsweise um Bunkeröle handeln.

Beispiele

Radikalische Addition

Beispiel 1:

Umsatz von Di-(2-ethylhexyl)-phosphit mit Glissopal® 1000 (BASF AG, Polyisobutylen mit mittlerem Molgewicht von 1000 g/mol)

In einem 500 ml Vierhalskolben mit Kontaktthermometer, Rührer und Tropftrichter wurden 46 g Di-(2-ethylhexyl)-phosphit (M = 306) und 150 g Glissopal® 1000 (M = 1000) vorgelegt. Unter Rühren und Stickstoffspülung wurde das Gemisch auf 150 °C erhitzt und bei dieser Temperatur über einen Zeitraum von 6 Stunden 4,9 g Di-tert-butylperoxid (2,5 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 98% bestimmt.

Beispiel 2:

Umsatz von Di-(2-ethylhexyl)-phosphit mit Glissopal® 2300 (BASF AG, Polyisobutylen mit mittlerem Molgewicht von 2300 g/mol)

In einem 500 ml Vierhalskolben mit Kontaktthermometer, Rührer und Tropftrichter wurden 20 g Di-(2-ethylhexyl)-phosphit (M = 306) und 150 g Glissopal® 2300 (M = 2300) vorgelegt. Unter Rühren und Stickstoffspülung wurde das Gemisch auf 150 °C erhitzt und bei dieser Temperatur über einen Zeitraum von 6 Stunden 4,3 g Di-tert-butylperoxid (2,5 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 96% bestimmt.

Beispiel 3:

Umsatz von Di-(2-ethylhexyl)-phosphit mit $C_{30+}$-$\alpha$-Olefin

In einem 250 ml Vierhalskolben mit Kontaktthermometer, Rührer und Tropftrichter wurden 27,5 g Di-(2-ethylhexyl)-phosphit (M = 306) und 73 g $C_{30+}$-$\alpha$-Olefin (M = 813) vorgelegt. Unter Rühren und Stickstoffspülung wurde das Gemisch auf 150 °C erhitzt und bei dieser Temperatur über einen Zeitraum von 6 Stunden 2,5 g Di-tert-butylperoxid (2,5 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 98% bestimmt.

Beispiel 4:

Umsatz von Di-(2-ethylhexyl)-phosphit mit Indopol® L8 (INEOS, niedermolekulares Polybuten)

In einem 500 ml Vierhalskolben mit Kontaktthermometer, Rührer und Tropftrichter wurden 94,4 g Di-(2-ethylhexyl)-phosphit (M = 306) und 96 g Indopol® L8 (M = 320 g/mol) vorgelegt. Unter Rühren und Stickstoffspülung wurde das Gemisch auf 150 °C erhitzt und bei dieser Temperatur über einen Zeitraum von 6 Stunden 9 g Di-tert-butylperoxid (4,6 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 94% bestimmt.

Beispiel 5:

Umsatz von Di-(2-ethylhexyl)-phosphit mit Indopol® H100 (INEOS, hochmolekulares Polybuten)

In einem 500 ml Vierhalskolben mit Kontaktthermometer, Rührer und Tropftrichter wurden 56,6 g Di-(2-ethylhexyl)-phosphit (M = 306) und 163,8 g Indopol® H100 (M = 910 g/mol) vorgelegt. Unter Rühren und Stickstoffspülung wurde das Gemisch auf 150 °C erhitzt und bei dieser Temperatur über einen Zeitraum von 6 Stunden 10,4 g Di-tert-butylperoxid (4,6 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 98% bestimmt.

Beispiel 6:

Umsatz von Diethylphosphit mit Glissopal® 1000

In einem 250 ml Vierhalskolben mit Kontaktthermometer, Rührer und Tropftrichter wurden 13 g Diethylphosphit (M = 138) und 90 g Glissopal® 1000 (M = 1000) vorgelegt. Unter Rühren und Stickstoffspülung wurde das Gemisch auf 150 °C erhitzt und bei dieser Temperatur über einen Zeitraum von 6 Stunden 3,8 g Di-tert-butylperoxid (3,7 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 98% bestimmt.

Beispiel 7:

Umsatz von Diethylphosphit mit Indopol® H100

In einem 500 ml Vierhalskolben mit Kontaktthermometer, Rührer und Tropftrichter wurden 36 g Diethylphosphit (M = 138) und 227,5 g Indopol® H100 (M = 910) vorgelegt. Unter Rühren und Stickstoffspülung wurde das Gemisch auf 150 °C erhitzt und bei dieser Temperatur über einen Zeitraum von 6 Stunden 13 g Di-tert-butylperoxid (4,8 %) zugetropft. Nach beendeter Zugabe wurde 4 Stunden bei 150 °C nachreagiert. Das Produkt wurde mittels $^{31}P$-NMR-Spektroskopie analysiert und die Ausbeute an Phosphonsäureester mit ≥ 85% bestimmt.

Verseifung

Beispiel 8:

Verseifung von Di-(2-ethylhexyl)-phosphit-Glissopal® 1000 Addukt

In einem 250 ml Vierhalskolben mit Rührer, Tropftrichter und Wasserauskreiser wurden 67 g Di-(2-ethylhexyl)-phosphit-Glissopal® 1000 Addukt (M = 1314) und 1,4 g Alkylbenzolsulfonsäure (2,5%) vorgelegt. Unter Rühren und Stickstoffspülung wurde das Gemisch auf 190 °C erhitzt und bei dieser Temperatur langsam die zehnfache Menge an theoretisch benötigtem VE-Wasser (18,4 g) zugetropft. Das entstehende 2-Ethylhexanol sowie überschüssiges Wasser wurde bei 190 °C über den Auskreiser abgenommen. Das Produkt wurde mittels $^{31}P$-NMR-Spektroskopie und Säurezahl analysiert und eine quantitative Verseifung des eingesetzten Phosphonsäureesters nachgewiesen.

Beispiel 9:

Verseifung von Diethylphosphit-Glissopal® 1000 Addukt

In einem 250 ml Vierhalskolben mit Rührer, Tropftrichter und Wasserauskreiser wurden 62,2 g Diethylphosphit-Glissopal® 1000 Addukt (M = 1137) und 2 g Alkylbenzolsulfonsäure (2,5 %) vorgelegt. Unter Rühren und Stickstoffspülung wurde das Gemisch auf 150 °C erhitzt und bei dieser Temperatur langsam die zehnfache Menge an theoretisch benötigtem VE-Wasser (20 g) zugetropft. Das entstehende Ethanol sowie überschüssiges Wasser wurde bei 150 °C über den Auskreiser abgenommen. Das Produkt wurde mittels $^{31}P$-NMR-Spektroskopie und Säurezahl analysiert und eine quantitative Verseifung des eingesetzten Phosphonsäureesters nachgewiesen.

Beispiel 10:

Verseifung von Di-(2-ethylhexyl)-phosphit-Indopol® H100 Addukt

In einem 250 ml Vierhalskolben mit Rührer, Tropftrichter und Wasserauskreiser wurden 60 g Di-(2-ethylhexyl)-phosphit-Indopol H100 Addukt (M = 1225) und 1,3 g Alkylbenzolsulfonsäure (2,5 %) vorgelegt. Unter Rühren und Stickstoffspülung wurde das Gemisch auf 190 °C erhitzt und bei dieser Temperatur langsam die zehnfache Menge an theoretisch benötigtem VE-Wasser (18 g) zugetropft. Das entstehende 2-Ethylhexanol sowie überschüssiges Wasser wurde bei 190 °C über den Auskreiser abgenommen. Das Produkt wurde mittels $^{31}P$-NMR-Spektroskopie und Säurezahl analysiert und eine quantitative Verseifung des eingesetzten Phosphonsäureesters nachgewiesen.

Beispiel 11:

Verseifung von Diethylphosphit-Indopol® H100 Addukt

In einem 500 ml Vierhalskolben mit Rührer, Tropftrichter und Wasserauskreiser wurden 123 g Diethylphosphit-Indopol H100 Addukt (M = 1048) und 3 g Alkylbenzolsulfonsäure (2,5 %) vorgelegt. Unter Rühren und Stickstoffspülung wurde das Gemisch auf 150 °C erhitzt und bei dieser Temperatur langsam die zehnfache Menge an theoretisch benötigtem VE-Wasser (42 g) zugetropft. Das entstehende Ethanol sowie überschüssiges Wasser wurde bei 150 °C über den Auskreiser abgenommen. Das Produkt wurde mittels $^{31}$P-NMR-Spektroskopie und Säurezahl analysiert und eine quantitative Verseifung des eingesetzten Phosphonsäureesters nachgewiesen.

Prüfung und Wirksamkeit von Asphaltendispergatoren

Prinzip des Dispergiertests

Dispergierung und Ausfällen von Asphaltenen hängen von der Natur des Kohlenwasserstoffmediums ab. Asphaltene sind in aromatischen, aber nicht in aliphatischen Kohlenwasserstoffen löslich. Somit können Dispergatoren getestet werden, indem man das Öl oder extrahierte Asphaltene in einem aromatischen Lösemittel löst und dann einen aliphatischen Kohlenwasserstoff zugibt, um einen Niederschlag zu erzeugen. Da Asphaltene von dunkler Farbe sind, kann die Menge des Niederschlages durch eine kolorimetrische Messung der überstehenden Flüssigkeit bestimmt werden. Je dunkler die überstehende Flüssigkeit ist, desto mehr Asphaltene bleiben dispergiert, d. h. umso besser ist der Dispergator. Dieser Test wird beschrieben in CA-A-2 029 465. In vorliegender Version des Tests wird das Fällungsmedium so gewählt, dass die Asphaltene zum größten Teil, aber nicht komplett ausfallen. Der Dispergiertest wird gemäß den Schritten a) bis f) durchgeführt:

a) eine 25 Gew.-%ige Lösung des Öls in Toluol wird filtriert, um Verunreinigungen zu beseitigen.
b) 9,5 ml Heptan als Fällungsmittel für Asphaltene und 0,5 ml Toluol/Dispergator-Mischung (25:1) in ein gut 10 ml fassendes graduiertes Glasröhrchen vorlegen und gut schütteln. Dies entspricht einer Dispergatorkonzentration von 2.000 ppm. Bei Bedarf kann die Menge Dispergator variiert werden. Für die Nullprobe wird reines Toluol verwendet.
c) In das Glasröhrchen wird 0,1 ml von der gefilterten Öl-Lösung dazugegeben und ebenfalls gut geschüttelt;
d) Die Probe 2 Stunden ohne Erschütterung stehen lassen, damit die ausgefällten Asphaltene sich am Boden des Röhrchens sammeln können.
e) Nach Ablauf dieser Zeit wird das Volumen des Sediments an Hand der Graduierung abgeschätzt, das Aussehen der gesamten Probe protokolliert und von der überständigen Phase 1 ml vorsichtig mit einer Pipette abgenommen.
f) Die abpipettierte Menge wird in 5 ml einer 99:1 Toluol-Triethanolamin-Mischung gelöst und bei 600 nm photometriert.

Bewertung des Dispergiertests

Die Dispergierung A) wird mit folgender Gleichung errechnet:

$$A = 100\,(D-D_0)/D_0,$$

wobei D und $D_0$ optische Dichte von Messlösung und Blindprobe sind. Der maximale Wert von A, $A_{max}$, entspricht vollständiger Dispergierung der Asphaltene. Sie kann abgeschätzt werden, indem ein Versuch ohne Dispergator, mit Toluol anstatt Heptan, durchgeführt wird - dadurch bleiben die Asphaltene vollständig dispergiert. Das Volumen des Sediments liefert eine weitere Information über die Wirksamkeit des Dispergators. Je kleiner die Menge an Sediment ist, desto besser dispergiert ist die Substanz.

Dispergierwirkung der Beispielverbindungen

Mit einem asphaltenreichen Öl wurden erfindungsgemäße Substanzen und solche des Standes der Technik mit dem Dispergiertest geprüft. Die Dispergatordosis betrug in allen Fällen 100 ppm.

| | Dispergierwirkung A [%] |
|---|---|
| Produkt aus Beispiel 8 | 94 |
| Produkt aus Beispiel 9 | 93 |
| Produkt aus Beispiel 10 | 92 |
| Produkt aus Beispiel 11 | 94 |
| Kommerzielles Produkt A | 88 |
| Kommerzielles Produkt B | 86 |
| ohne Dispergator | 0 |

Bei dieser Versuchsreihe betrug die maximale Dispergierwirkung $A_{max}$ 94 %.

**Patentansprüche**

1. Verwendung von Phosphonsäuren der Formel (4)

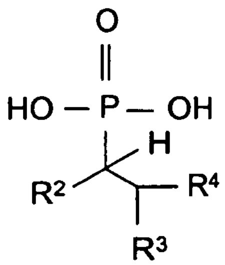

(4)

worin
$R^2$ für H oder $C_1$-$C_{500}$-Alkyl, und
$R^3$ und $R^4$ unabhängig voneinander für H oder $C_1$-$C_{500}$-Alkyl stehen, mit der Maßgabe, dass nicht alle der Reste $R^2$, $R^3$, $R^4$ für Wasserstoff stehen, und welche ein Molekulargewicht von 250 bis 10.000 Einheiten aufweisen, in Mengen von 0,5 bis 10.000 ppm bezogen auf das Öl, zur Dispergierung von Asphaltenen in asphaltenhaltigen Roh-, Rückstands- oder Destillatölen.

2. Verwendung gemäß Anspruch 1, wobei $R^2$ Wasserstoff oder ein $C_1$-bis $C_4$-Alkylrest ist.

3. Verwendung gemäß Anspruch 1 und/oder 2, wobei $R^2$ für Wasserstoff und $R^3$ und $R^4$ unabhängig voneinander für $C_1$-$C_{500}$-Alkyl stehen.

4. Verwendung gemäß einem oder mehrere der Ansprüche 1 bis 3, wobei $R^2$ für Wasserstoff, $R^3$ für Wasserstoff und $R^4$ für $C_1$-$C_{500}$-Alkyl stehen.

5. Verfahren zum Dispergieren von Asphaltenen in asphaltenhaltigen Roh-, Rückstands- und Destillatölen, indem dem zu behandelnden Roh-, Rückstands- oder Destillatöl mindestens eine Phosphonsäure gemäß Formel (4) in einer Menge von 0,5 bis 10.000 ppm zugegeben wird.

6. Verfahren gemäß Anspruch 5, worin die Asphaltendispergierung im

7. Verfahren gemäß Anspruch 5 und/oder 6, worin neben mindestens einer Phosphonsäure gemäß Formel (4) zusätzlich Alkylphenolformaldehydharze, oxalkylierte Amine, Mono- oder Dialkylbenzolsulfonsäuren, Petrolsulfonsäuren, Alkansulfonsäuren, Wachsdispergatoren oder beliebige Mischungen daraus verwendet werden.

8. Asphaltenhaltige Roh-, Rückstands- oder Destillatöle, enthaltend 0,5 bis 10.000 ppm einer Verbindung der Formel (4),

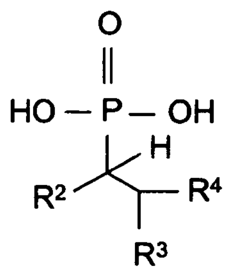

(4)

worin
$R^2$ H oder eine Alkylgruppe mit 30 bis 500 C-Atomen, $R^3$, $R^4$ unabhängig voneinander H oder eine Alkylgruppe mit 30 bis 500 C-Atomen, mit der Maßgabe, dass nicht alle der Reste $R^2$, $R^3$, $R^4$ für H stehen, und welche ein Molekulargewicht von 250 bis 10.000 g/mol aufweist.

**Claims**

1. The use of phosphonic acids of the formula (4)

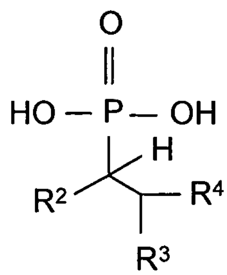

(4)

in which
$R^2$ is H or $C_1$-$C_{500}$-alkyl, and
$R^3$ and $R^4$, independently of one another, are H or $^2C_1$-$C_{500}$-alkyl, with the proviso that not all of the radicals $R^2$, $R^3$, $R^4$ are hydrogen, and which have a molecular weight of from 250 to 10 000 units, in amounts of from 0.5 to 10 000 ppm, based on the oil, for dispersing asphaltenes in asphaltene-containing crude oils or residual oils.

2. The use as claimed in claim 1, where $R^2$ is hydrogen or a $C_1$- to $C_4$-alkyl radical.

3. The use as claimed in claim 1 and/or 2, where $R^2$ is hydrogen and $R^3$ and $R^4$, independently of one another, are $C_1$-$C_{500}$-alkyl.

4. The use as claimed in one or more of claims 1 to 3, wherein $R^2$ is hydrogen, $R^3$ is hydrogen and $R^4$ is $C_1$-$C_{500}$-alkyl.

5. A process for dispersing asphaltenes in crude oils and products derived therefrom, by adding at least one phosphonic acid according to formula (4) in an amount of from 0.5 to 10 000 ppm to the crude oil, residual oil or distillate oil to be treated.

6. The process as claimed in claim 5, in which the asphaltene dispersion takes place in the squeeze treatment.

7. The process as claimed in claim 5 and/or 6, in which, besides at least one phosphonic acid according to formula (4), additionally alkylphenol formaldehyde resins, oxalkylated amines, mono- or dialkylbenzenesulfonic acids, petroleumsulfonic acids, alkanesulfonic acids, wax dispersants or any desired mixtures thereof are used.

8. An asphaltene-containing crude oil or residual oil comprising 0.5 to 10 000 ppm of a compound of the formula (4) in which
$R^2$ is H or an alkyl group having 30 to 500 carbon atoms,
$R^3$, $R^4$, independently of one another, are H or an alkyl group having 30 to 500 carbon atoms, with the proviso that not all of the radicals $R^2$, $R^3$, $R^4$ are H, and which has a molecular weight of from 250 to 10 000 g/mol.

## Revendications

1. Utilisation d'acides phosphoniques de formule (4)

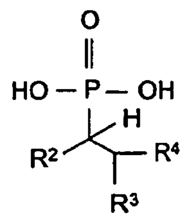

(4)

où
$R^2$ représente H ou $C_1$-$C_{500}$-alkyle, et
$R^3$ et $R^4$ représentent, indépendamment l'un de l'autre, H ou $C_1$-$C_{500}$-alkyle, à condition que pas tous les radicaux $R^2$, $R^3$, $R^4$ ne représentent hydrogène, et qui présentent un poids moléculaire de 250 à 10 000 unités, en des quantités de 0,5 à 10 000 ppm par rapport à l'huile, pour la dispersion d'asphaltes dans des huiles brutes, résiduaires ou de distillation contenant des asphaltes.

2. Utilisation selon la revendication 1, où $R^2$ représente hydrogène ou un radical $C_1$-$C_4$-alkyle.

3. Utilisation selon la revendication 1 et/ou 2, où $R^2$ représente hydrogène et $R^3$ et $R^4$ représentent, indépendamment l'un de l'autre, $C_1$-$C_{500}$-alkyle.

4. Utilisation selon l'une ou plusieurs des revendications 1 à 3, où $R^2$ représente hydrogène, $R^3$ représente hydrogène et $R^4$ représente $C_1$-$C_{500}$-alkyle.

5. Procédé pour la dispersion d'asphaltes dans des huiles brutes, résiduaires et de distillation contenant des asphaltes, l'huile brute, résiduaire ou de distillation étant additionnée d'au moins un acide phosphonique selon la formule (4) en une quantité de 0,5 à 10 000 ppm.

6. Procédé selon la revendication 5, la dispersion d'asphaltes ayant lieu dans un traitement par "squeeze" (compression).

7. Procédé selon la revendication 5 et/ou 6, dans lequel on utilise, outre au moins un acide phosphonique selon la formule (4), en outre des résines d'alkylphénolformaldéhyde, des amines oxalkylées, des acides monoalkylbenzènesulfoniques ou dialkylbenzènesulfoniques, des acides sulfoniques de pétrole, des acides alcanesulfoniques, des dispersants de cire ou des mélanges quelconques de ceux-ci.

8. Huiles brutes, résiduaires ou de distillation contenant des asphaltes, contenant 0,5 à 10 000 ppm d'un composé de formule (4),

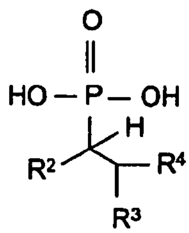

(4)

où
$R^2$ représente H ou un groupe alkyle comprenant 30 à 500 atomes de carbone,
$R^3$, $R^4$ représentent, indépendamment l'un de l'autre, H ou un groupe alkyle comprenant 30 à 500 atomes de carbone, à condition que pas tous les radicaux $R^2$, $R^3$, $R^4$ ne représentent H, et qui présente un poids moléculaire de 250 à 10 000 g/mole.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- CA 2029465 A
- CA 2075749 A
- US 4414035 A, D.-L. Chang und H. S. Fogler
- GB 2423099 A
- DE 102005045133 A
- EP 1362087 A
- US 5494607 A
- EP 0995012 A
- US 2006042796 A
- US 2007265171 A
- DE 19927787 A
- DE 10305623

### In der Beschreibung aufgeführte Nicht-Patentliteratur

- **N. BOUTS et al.** *J. Pet. Technol.,* 1995, vol. 47, 782-787
- **A. STILES et al.** *J. Am. Chem. Soc.,* 1958, vol. 80, 714-716